# EUROPEAN PATENT SPECIFICATION

(11) **EP 3 627 643 B1**
(45) Date of publication and mention of the grant of the patent: **10.09.2025**
(21) Application number: 18803044.9
(22) Date of filing: 19.03.2018
(51) Int. Cl.: H02G 15/013, H02B 13/00, H01R 13/52, H01R 13/53, H01R 4/70, H01B 17/30, H01B 9/02, H01F 27/04, H02G 3/22

(54) **WATERPROOF STRUCTURE FOR SOLID INSULATION BUS, AND CONNECTION STRUCTURE FOR SOLID INSULATION BUS**
WASSERDICHTE STRUKTUR FÜR EINEN FESTEN ISOLIERBUS UND VERBINDUNGSSTRUKTUR FÜR EINEN FESTEN ISOLIERUNGSBUS
STRUCTURE ÉTANCHE POUR BUS D'ISOLATION SOLIDE, ET STRUCTURE DE CONNEXION POUR BUS D'ISOLATION SOLIDE

(30) Priority: 15.05.2017 JP 2017096863
(43) Date of publication of application: 25.03.2020
(73) Proprietor: Sumitomo Electric Industries, Ltd., Osaka-shi, Osaka 541-0041 (JP)
(72) Inventor: NUMAZAWA, Toshiyuki, Osaka-shi Osaka 541-0041 (JP); TANJI, Yoshikazu, Osaka-shi Osaka 541-0041 (JP); KONDOU, Satoshi, Kyoto-shi Kyoto 615-8686 (JP); TANAKA, Yasuhiro, Kyoto-shi Kyoto 615-8686 (JP)
(74) Representative: Boult Wade Tennant LLP
(86) International application number: PCT/JP2018/010831
(87) International publication number: WO 2018/211811

(56) References cited:
- CN-A- 102 790 304
- FR-A1- 2 736 461
- JP-A- H0 698 439
- JP-A- H09 289 049
- JP-A- H10 233 244
- JP-U- S6 226 129
- US-A- 3 861 777

## Description

### TECHNICAL FIELD

The present invention relates to a waterproof structure for a solid insulation bus and a connection structure for a solid insulation bus.

The present application claims priority based on Japanese Patent Application No. 2017-096863 filed on May 15, 2017.

### BACKGROUND ART

PTL 1 discloses an insulator covered bus of an electrical connector, including a bus having a rod-like conductor and a short twisted wire connected in combination, terminal fittings connected to both ends of the bus, and an inner semiconducting layer, an insulating layer, and an outer semiconducting layer molded on the bus and the terminal fittings. This insulator covered bus of the electrical connector is attached to connect power apparatuses.

### CITATION LIST

### PATENT LITERATURE

PTL 1: Japanese Patent Laying-Open No. 10-233244
FR2736461 describes a sealed insulated bushing for gas-filled electrical equipment - has conic female insert of insulating material accepting an insulated conic male part with a conductor passing through its centre.
US3861777A describes a separable electrical connector.
CN102790304A describes a high-voltage insulating solid-encapsulated bus plug and external-shield grounding enclosed isolated bus.

### SUMMARY OF INVENTION

The present invention provides a waterproof structure according to claim 1.

In addition, the present invention provides a connection structure comprising the waterproof structure according to claim 4.

### BRIEF DESCRIPTION OF DRAWINGS

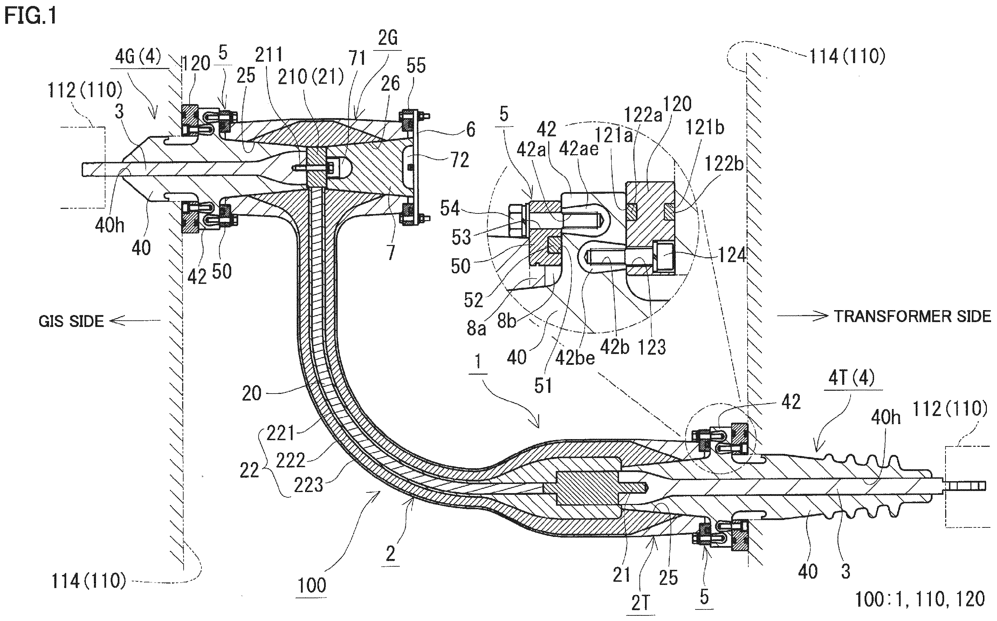

Fig. 1 is a schematic configuration diagram showing a connection structure for a solid insulation bus including a waterproof structure for the solid insulation bus in accordance with an embodiment.

### DETAILED DESCRIPTION

### [Problem to be Solved by the Present Disclosure]

Countermeasures for preventing water from infiltrating into an insulator covered bus of an electrical connector (solid insulation bus) when it is used outdoors are desired. However, waterproofing is not considered in PTL 1.

Thus, an object of the present disclosure is to provide a waterproof structure for a solid insulation bus capable of preventing infiltration of water into the solid insulation bus. In addition, another object of the present disclosure is to provide a connection structure for a solid insulation bus capable of preventing infiltration of water into the solid insulation bus.

### [Advantageous Effect of the Present Disclosure]

The waterproof structure for the solid insulation bus and the connection structure for the solid insulation bus of the present disclosure described above can prevent infiltration of water into the solid insulation bus.

### [Description of Embodiment of the Present Invention]

First, the content of an embodiment of the present invention will be described in list form.
(1) A waterproof structure for a solid insulation bus in accordance with the present invention includes a solid insulation bus having a conductor, a terminal connected to an end portion of the conductor, and a coating portion including an inner semiconducting layer, an insulating layer, and an outer semiconducting layer stacked in order from a conductor/terminal side toward outside; a connector of a conducting bar connected to the terminal; a bushing having a bushing body portion covering outer circumference of the connector of the conducting bar, and a bushing flange protruding from the bushing body portion outward in a radial direction thereof; and a waterproof portion having a waterproof flange interposed between an end surface of the solid insulation bus and the bushing flange.

With the above configuration, the waterproof flange can prevent water from infiltrating into the solid insulation bus from between the end surface of the solid insulation bus and the bushing flange. Accordingly, the waterproof structure for the solid insulation bus is a structure necessary for use under an outdoor environment where it may be exposed to rain water.

(2) As one aspect of the waterproof structure for the solid insulation bus, the waterproof portion includes a seal member which seals between the waterproof flange and the bushing flange, and a seal groove which is formed in a bushing flange-side surface of the waterproof flange, and into which the seal member is fitted.

By including the seal member as the waterproof portion, the waterproof structure for the solid insulation bus can have an improved waterproof effect.

(3) According to the invention, an outer circumferential portion of the bushing flange is located more outward in a radial direction of the waterproof flange than an outer circumferential portion of the waterproof flange.

With the above configuration, when water splashes on the bushing flange, a water droplet thereof is easily guided toward the waterproof flange. Since the waterproof flange can prevent water from infiltrating into the solid insulation bus, and a water droplet is less likely to remain around the waterproof flange, the waterproof portion easily exhibits the waterproof effect.

(4) According to the invention, the bushing body portion includes an insertion region inserted into the solid insulation bus. Preferably, a region formed between an inner circumferential surface of the waterproof flange and an outer circumferential surface of the bushing body portion includes a press-fit region which the coating portion enters, and a space region which the coating portion does not enter.

The reason why the coating portion enters the region formed between the inner circumferential surface of the waterproof flange and the outer circumferential surface of the bushing body portion is that, when the insertion region of the bushing body portion is inserted (press-fitted) into the solid insulation bus, a part of a material for constituting the coating portion is elastically deformed. Due to the elastic deformation of the coating portion, the waterproof flange is more firmly fixed to the end surface of the solid insulation bus, and thus the waterproof structure for the solid insulation bus can have an improved waterproof effect.

(5) A connection structure for a solid insulation bus in accordance with the embodiment of the present invention includes: the waterproof structure for the solid insulation bus according to any one of (1) to (4) described above; a connection point on a transformation apparatus connected to the solid insulation bus via the connector of the conducting bar; and a mounting flange interposed between a surface of the bushing flange facing the connection point on the transformation apparatus and the connection point on a transformation apparatus.

By including the waterproof structure for the solid insulation bus described above, waterproofing can be provided at each end portion of the solid insulation bus when power apparatuses are connected via the solid insulation bus, and thus the connection structure can be constructed under the outdoor environment where it may be exposed to rain water.

(6) As one aspect of the connection structure for the solid insulation bus, the bushing flange includes a waterproof-side bolt hole opened on a waterproof flange side, and a mounting-side bolt hole opened on a mounting flange side, and the waterproof-side bolt hole is located more outward in a radial direction of the bushing flange than the mounting-side bolt hole.

Since the waterproof-side bolt hole is located more outward in the radial direction of the bushing flange than the mounting-side bolt hole, a bolt for fixing the waterproof flange to the bushing flange can be provided outward in the radial direction of the waterproof flange. Thereby, the waterproof flange is easily fixed to the bushing flange, and close contact can be established between the waterproof flange and the end surface of the solid insulation bus. Thus, sealing property between the waterproof flange and the solid insulation bus can be secured.

(7) According to the invention, the outer circumferential portion of the bushing flange is located more outward in the radial direction of the waterproof flange than the outer circumferential portion of the waterproof flange, and is preferably located more inward in the radial direction of the waterproof flange than an outer circumferential portion of the mounting flange.

When water splashes on the mounting flange, a water droplet thereof is easily guided toward the waterproof flange via the bushing flange. Since the waterproof flange can prevent water from infiltrating into the solid insulation bus, the water droplet guided to the waterproof flange flows down from the solid insulation bus.

### [Details of Embodiment of the Present Invention]

Hereinafter, the embodiment of the present invention will be specifically described with reference to the drawing. It should be noted that the present invention is not limited to these examples, and is defined by the scope of the claims and is intended to include any modifications within the scope of the claims.

### <<Overall Configuration>>

Referring to Fig. 1, a waterproof structure 1 for a solid insulation bus and a connection structure 100 for the solid insulation bus in accordance with the embodiment will be described. Connection structure 100 for the solid insulation bus in accordance with the embodiment is intended to connect a gas insulated switchgear (GIS: located on the left side in Fig. 1 but not shown) and a transformer (located on the right side in Fig. 1 but not shown) serving as connection points 110 on transformation apparatuses, via a solid insulation bus 2. Waterproof structure 1 for the solid insulation bus in accordance with the embodiment is intended to waterproof a connection portion between the GIS and solid insulation bus 2 and a connection portion between the transformer and solid insulation bus 2 when the GIS and the transformer are connected via solid insulation bus 2. In the description below, a side closer to the GIS in each constituting member will be referred to as a GIS side, and a side closer to the transformer in each constituting member will be referred to as a transformer side. In the following, waterproof structure 1 for the solid insulation bus will be described, and then connection structure 100 for the solid insulation bus will be described.

### <<Waterproof Structure for Solid Insulation Bus>>

Waterproof structure 1 for the solid insulation bus includes solid insulation bus 2, a connector 3 of a conducting bar connected to a terminal 21 included in solid insulation bus 2, and a bushing 4 provided on the outer circumference of connector 3 of the conducting bar. Solid insulation bus 2 includes a conductor 20, terminal 21 connected to an end portion of conductor 20, and a coating portion 22 coated on the outer circumference of conductor 20 and terminal 21. Bushing 4 includes a bushing body portion 40 covering the outer circumference of connector 3 of the conducting bar, and a bushing flange 42 protruding from bushing body portion 40 outward in a radial direction thereof. Waterproof structure 1 for the solid insulation bus in accordance with the embodiment has a characteristic that it includes a waterproof portion 5 having a waterproof flange 50 interposed between an end surface of solid insulation bus 2 and bushing flange 42.

### [Solid Insulation Bus]

Solid insulation bus 2 includes conductor 20 arranged at the center, terminal 21 connected to an end portion of conductor 20, and coating portion 22 coated on the outer circumference of conductor 20 and terminal 21. Coating portion 22 includes an inner semiconducting layer 221, an insulating layer 222, and an outer semiconducting layer 223 stacked in order from a conductor 20/terminal 21 side toward outside.

Examples of conductor 20 include a rod-like conductor, and a composite conductor which is a combination of a rod-like conductor and a short twisted wire. Terminal 21 is constituted, for example, by attaching a sleeve provided with terminal 21 to an end portion of conductor 20 by fastening connection or the like.

Inner semiconducting layer 221 and outer semiconducting layer 223 are made of a semiconducting rubber material such as semiconducting silicone rubber, for example. Insulating layer 222 is made of an insulating rubber material such as insulating silicone rubber, for example.

Solid insulation bus 2 is a molded product obtained by molding a rubber material on the outer circumference of conductor 20 and terminal 21, using a molding die, for example. Specifically, conductor 20 provided with terminal 21 is arranged in a first mold, and the semiconducting rubber material is injected between the first mold and conductor 20/terminal 21, to obtain a first intermediate member having inner semiconducting layer 221 on the outer circumference of conductor 20 and terminal 21. Then, the first intermediate member is arranged in a second mold, and the insulating rubber material is injected between the second mold and the first intermediate member, to obtain a second intermediate member having inner semiconducting layer 221 and insulating layer 222 on the outer circumference of conductor 20 and terminal 21. Finally, the second intermediate member is arranged in a third mold, and the semiconducting rubber material is injected between the third mold and the second intermediate member, to obtain solid insulation bus 2 having inner semiconducting layer 221, insulating layer 222, and outer semiconducting layer 223 on the outer circumference of conductor 20 and terminal 21.

Coating portion 22 includes a space 25 for connection connected to one end portion of bushing 4. Space 25 for connection is a recess formed by insulating layer 222 and outer semiconducting layer 223 of coating portion 22. Terminal 21 is exposed at a bottom surface of space 25 for connection. Into this space 25 for connection, bushing body portion 40 having connector 3 of the conducting bar described later therein is inserted (press-fitted). Since terminal 21 is exposed at the bottom surface of space 25 for connection, terminal 21 is connected to connector 3 of the conducting bar inside space 25 for connection by inserting bushing body portion 40 into space 25 for connection. An inner circumferential surface of space 25 for connection is constituted of an inclined surface having a truncated cone shape tapering from an opened side toward a bottom-surface side.

In this example, solid insulation bus 2 has a GIS-side end portion 2G and a transformer-side end portion 2T which are different in shape. In transformer-side end portion 2T (on the right side in Fig. 1), coating portion 22 is provided along a longitudinal direction of conductor 20, and space 25 for connection is opened coaxially with an extension in the longitudinal direction of conductor 20. In transformer-side end portion 2T, coating portion 22 has a thickness thicker than that of a central portion of solid insulation bus 2, and has an outer diameter larger than that of the central portion of solid insulation bus 2. On the other hand, in GIS-side end portion 2G (on the left side in Fig. 1), insulating layer 222 and outer semiconducting layer 223 of coating portion 22 extend in a direction crossing (in this example, perpendicular to) the longitudinal direction of conductor 20, and space 25 for connection is opened in the direction crossing (perpendicular to) the longitudinal direction of conductor 20. Further, in GIS-side end portion 2G, a space 26 for a back plug is opened on a side opposite to space 25 for connection, in the direction crossing (perpendicular to) the longitudinal direction of conductor 20. Space 26 for the back plug is a recess formed by insulating layer 222 and outer semiconducting layer 223 of coating portion 22. An inner circumferential surface of space 26 for the back plug is also constituted of an inclined surface having a truncated cone shape tapering from an opened side toward a bottom-surface side.

### [Connector of Conducting Bar]

Connector 3 of the conducting bar has one end portion connected to terminal 21 of solid insulation bus 2, and the other end portion connected to a lead conductor (not shown) of a connection point on a transformation apparatus (the GIS or the transformer). By electrically connecting terminal 21 to the lead conductor of the connection point on the transformation apparatus via connector 3 of the conducting bar at each of GIS-side end portion 2G and transformer-side end portion 2T of solid insulation bus 2, the GIS and the transformer are electrically connected via solid insulation bus 2.

In this example, for connecting terminal 21 at transformer-side end portion 2T of solid insulation bus 2 to connector 3 of the conducting bar, terminal 21 is inserted into an insertion hole formed in a terminal 21-side end portion of connector 3 of the conducting bar to perform pressurized connection. Further, for connecting terminal 21 at GIS-side end portion 2G of solid insulation bus 2 to connector 3 of the conducting bar, a plate-like connection portion 210 is attached to terminal 21, a surface of connection portion 210 is connected to an end surface of connector 3 of the conducting bar, and they are fixed using a bolt 211. Space 26 for the back plug of solid insulation bus 2 is provided to tighten bolt 211.

### [Bushing]

Bushing 4 includes bushing body portion 40 covering the outer circumference of connector 3 of the conducting bar, and bushing flange 42 protruding from bushing body portion 40 outward in the radial direction thereof. Bushing body portion 40 and bushing flange 42 are an integrally molded product. Bushing 4 is made of epoxy resin, for example.

### <Bushing Body Portion>

Bushing body portion 40 is a cylindrical member including an insertion hole 40h which penetrates one end portion and the other end portion in a longitudinal direction thereof, and through which connector 3 of the conducting bar is inserted. Connector 3 of the conducting bar is integrally molded inside bushing body portion 40. That is, bushing body portion 40 (bushing 4 including bushing flange 42) and connector 3 of the conducting bar are a molded product obtained by molding a material for constituting bushing 4 on the outer circumference of connector 3 of the conducting bar, using a molding die.

Bushing body portion 40 includes an insertion region inserted into space 25 for connection of solid insulation bus 2. An outer circumferential surface of the insertion region of bushing body portion 40 extends along the inner circumferential surface of space 25 for connection, and is constituted of an inclined surface having a truncated cone shape tapering toward an end portion. The outer diameter of the insertion region of bushing body portion 40 is slightly larger than the inner diameter of space 25 for connection. Accordingly, when the insertion region of bushing body portion 40 is inserted (press-fitted) into space 25 for connection, the insertion region of bushing body portion 40 is fixed within space 25 for connection in a pressure contact state.

In this example, the shape of bushing body portion 40 is different in a GIS-side bushing 4G and a transformer-side bushing 4T. In transformer-side bushing 4T, a region on a side opposite to the insertion region with bushing flange 42 being sandwiched therebetween is longer than a corresponding region in GIS-side bushing 4G, and has a plurality of collar portions on the outer circumference thereof. Creepage distance is secured by the collar portions.

### <Bushing Flange>

Bushing flange 42 is a plate-like member protruding outward in the radial direction of bushing body portion 40, at a position in the longitudinal direction of bushing body portion 40. Bushing flange 42 is provided on the entire circumference of bushing body portion 40 in a circumferential direction. Bushing flange 42 is annularly provided. Bushing flange 42 protrudes such that an outer circumferential portion thereof is located more outward in a radial direction of solid insulation bus 2 than the end surface of solid insulation bus 2 (an end surface of space 25 for connection). In addition, bushing flange 42 protrudes such that the outer circumferential portion thereof is located more outward in a radial direction of waterproof flange 50 described later than an outer circumferential portion of waterproof flange 50.

As shown in an enlarged view in Fig. 1, bushing flange 42 includes bolt holes 42a and 42b in front and rear surfaces, respectively. Bolt hole 42a is a recess opened on a side closer to waterproof flange 50 described later, and a bolt 54 for fixing waterproof flange 50 to bushing flange 42 is screwed therein. Bolt hole 42b is a recess opened on a side closer to a mounting flange 120 described later, and a bolt 124 for fixing mounting flange 120 to bushing flange 42 is screwed therein. Embedded electrodes 42ae and 42be are embedded in inner surfaces of bolt holes 42a and 42b, respectively. Waterproof-side bolt hole 42a opened on the waterproof flange 50 side is located more outward in a radial direction of bushing flange 42 than mounting-side bolt hole 42b opened on the mounting flange 120 side. In addition, when waterproof-side bolt hole 42a and mounting-side bolt hole 42b are seen through in a circumferential direction of bushing flange 42, tip end portions of bolt holes 42a and 42b overlap. Bolt holes 42a and 42b are respectively provided in bushing flange 42 uniformly in the circumferential direction. Bolt holes 42a and 42b may be provided at positions deviated from each other in the circumferential direction, due to restrictions on the size of bolt holes 42a and 42b, the size such as thickness of bushing flange 42, and the like.

### [Waterproof Portion]

Waterproof portion 5 includes waterproof flange 50 interposed between the end surface of solid insulation bus 2 (end surface of space 25 for connection) and bushing flange 42. In addition, waterproof portion 5 includes a seal member 52 which seals between waterproof flange 50 and bushing flange 42, and a seal groove 51 formed in a bushing flange 42-side surface of waterproof flange 50.

Waterproof flange 50 is an annular member. In this example, waterproof flange 50 is an annular member located on the outer circumference of bushing body portion 40 when waterproof flange 50 is attached to bushing flange 42, and having an inner circumferential surface which forms a space region (a space region 8b shown in Fig. 1 is a part thereof) between the inner circumferential surface and an outer circumferential surface of bushing body portion 40. Waterproof flange 50 has an outer circumferential portion located more inward in the radial direction of bushing flange 42 than the outer circumferential portion of bushing flange 42. Waterproof flange 50 is made of brass (a Cu-Zn alloy), for example.

Waterproof flange 50 includes recessed seal groove 51 formed in the bushing flange 42-side surface. Seal groove 51 is annularly formed along the outer shape of waterproof flange 50. Seal member 52 is fitted into seal groove 51. Seal member 52 is an O ring made of nitrile rubber, for example. The width and the depth of seal groove 51 can be selected as appropriate as long as they allow seal member 52 to be fitted into seal groove 51 and to seal between waterproof flange 50 and bushing flange 42.

Waterproof flange 50 includes a through hole 53 which penetrates front and rear surfaces. Bolt 54 for fixing waterproof flange 50 to bushing flange 42 penetrates through hole 53. Through hole 53 is located more outward in the radial direction of waterproof flange 50 than seal groove 51. The bushing flange 42-side surface of waterproof flange 50 is entirely in contact with a surface of bushing flange 42. On the other hand, in a solid insulation bus 2 (space 25 for connection)-side surface of waterproof flange 50, an inward side thereof is in contact with the end surface of solid insulation bus 2 (end surface of space 25 for connection), and an outward side thereof is not in contact with the end surface of solid insulation bus 2 (end surface of space 25 for connection) and is exposed to the outside. Since through hole 53 is located more outward in the radial direction of waterproof flange 50 than seal groove 51, waterproof flange 50 is easily fixed to bushing flange 42 using bolt 54, and the head of bolt 54 can be prevented from interfering with contact between waterproof flange 50 and the end surface of solid insulation bus 2.

Waterproof flange 50 is fixed to bushing flange 42 using bolt 54, and is fixed to solid insulation bus 2 by pressure contact. Specifically, waterproof flange 50 is fixed to bushing flange 42 by causing bolt 54 to penetrate through hole 53 in waterproof flange 50, and screwing bolt 54 into bolt hole 42a in bushing flange 42. In bushing 4 having bushing flange 42 to which waterproof flange 50 is fixed, by inserting (press-fitting) the insertion region of bushing body portion 40 into space 25 for connection, the insertion region of bushing body portion 40 is fixed within space 25 for connection in a pressure contact state, and waterproof flange 50 is fixed to the end surface of solid insulation bus 2 (end surface of space 25 for connection) in a pressure contact state.

In a state where waterproof flange 50 is fixed between the end surface of solid insulation bus 2 (end surface of space 25 for connection) and bushing flange 42, the region formed between the inner circumferential surface of waterproof flange 50 and the outer circumferential surface of bushing body portion 40 includes a press-fit region 8a which coating portion 22 enters, and space region 8b which coating portion 22 does not enter. The reason why coating portion 22 enters the region formed between the inner circumferential surface of waterproof flange 50 and the outer circumferential surface of bushing body portion 40 is that, when the insertion region of bushing body portion 40 is inserted into space 25 for connection, a part of a material for constituting coating portion 22 is elastically deformed during the insertion, because the outer diameter of the insertion region of bushing body portion 40 is slightly larger than the inner diameter of space 25 for connection. Due to the elastic deformation of coating portion 22, waterproof flange 50 is fixed to the end surface of solid insulation bus 2 (end surface of space 25 for connection) in a pressure contact state.

### [Others]

To space 26 for the back plug formed in GIS-side end portion 2G of solid insulation bus 2, a sealing flange 6 having an insulating plug 7 is attached. Insulating plug 7 is made of epoxy resin, for example, and sealing flange 6 is made of brass, for example.

Insulating plug 7 has an outer circumferential surface which extends along the inner circumferential surface of space 26 for the back plug, and which is constituted of an inclined surface having a truncated cone shape tapering from one end toward the other end. The outer diameter of insulating plug 7 is slightly larger than the inner diameter of space 26 for the back plug. Accordingly, when insulating plug 7 is inserted (press-fitted) into space 26 for the back plug, insulating plug 7 is fixed within space 26 for the back plug in a pressure contact state. In insulating plug 7, embedded electrodes 71 and 72 are embedded in the vicinity of bolt 211 which connects connection portion 210 attached to terminal 21 to connector 3 of the conducting bar, and in the vicinity of a fixture to sealing flange 6.

A waterproof flange 55 is interposed between sealing flange 6 and the end surface of solid insulation bus 2 (an end surface of space 26 for the back plug). Waterproof flange 55 has the same configuration as that of waterproof flange 50 interposed between the end surface of solid insulation bus 2 (end surface of space 25 for connection) and bushing flange 42.

### <<Connection Structure for Solid Insulation Bus>>

Connection structure 100 for the solid insulation bus is intended to connect the GIS and the transformer via solid insulation bus 2, and includes waterproof structure 1 for the solid insulation bus described above, connection point 110 on the transformation apparatus (the GIS or the transformer) connected to solid insulation bus 2 via connector 3 of the conducting bar, and mounting flange 120.

### [Connection Point on Transformation Apparatus]

Connection point 110 on the transformation apparatus is the GIS or the transformer, and includes a connection target 112 (such as a lead conductor) connected to solid insulation bus 2 via connector 3 of the conducting bar, and a case 114 which accommodates connection target 112. The region of bushing body portion 40 on the side opposite to the insertion region with bushing flange 42 being sandwiched therebetween is accommodated within case 114, and connector 3 of the conducting bar is connected to connection target 112 within case 114.

### [Mounting Flange]

Mounting flange 120 is interposed between a surface of bushing flange 42 facing the connection point on the transformation apparatus and case 114 of the connection point on the transformation apparatus. Mounting flange 120 is an annular member. Mounting flange 120 has an outer circumferential portion located more outward in the radial direction of bushing flange 42 than the outer circumferential portion of bushing flange 42. Mounting flange 120 is made of brass, for example.

Mounting flange 120 includes a recessed seal groove 121a formed in a bushing flange 42-side surface, and a recessed seal groove 121b formed in a surface facing the connection point on the transformation apparatus. Seal grooves 121a and 121b are provided at positions overlapping in a thickness direction of mounting flange 120, and are annularly formed along the outer shape of bushing flange 42. A seal member 122a which seals between mounting flange 120 and bushing flange 42 is fitted into seal groove 121a, and a seal member 122b which seals between mounting flange 120 and the connection point on the transformation apparatus (case 114) is fitted into seal groove 121b. Seal members 122a and 122b are each an O ring made of nitrile rubber, for example.

Mounting flange 120 includes a through hole 123 which penetrates front and rear surfaces. Bolt 124 for fixing mounting flange 120 to bushing flange 42 penetrates through hole 123. Through hole 123 is formed such that, in a state where mounting flange 120 is fixed to bushing flange 42, the head of bolt 124 is located more inward than the surface of mounting flange 120. Accordingly, in the state where mounting flange 120 is fixed to bushing flange 42, the surface of mounting flange 120 is entirely in contact with an outer surface of case 114. In addition, through hole 123 is located more inward in a radial direction of mounting flange 120 than seal grooves 121a and 121b.

### <<Effect>>

In waterproof structure 1 for the solid insulation bus described above, waterproof flange 50 of waterproof portion 5 can prevent water from infiltrating into solid insulation bus 2 from between the end surface of solid insulation bus 2 (end surface of space 25 for connection) and bushing flange 42. In addition, waterproof flange 55 can also prevent water from infiltrating into solid insulation bus 2 from between the end surface of the space formed in coating portion 22 (end surface of space 26 for the back plug) and sealing flange 6. Accordingly, waterproof structure 1 for the solid insulation bus can be used even under an environment where it is exposed to rain water, such as outdoors. In particular, even when waterproof structure 1 for the solid insulation bus is intended for use at a high voltage such as 66 kV or more, it can exhibit a high waterproof effect. Accordingly, by including waterproof structure 1 for the solid insulation bus, connection structure 100 for the solid insulation bus can be constructed under an outdoor environment where it may be exposed to rain water.

Since waterproof flange 50 has the outer circumferential portion located more inward in the radial direction of bushing flange 42 than the outer circumferential portion of bushing flange 42, water splashing on bushing flange 42 can be guided toward waterproof flange 50. In addition, since bushing flange 42 has the outer circumferential portion located more inward in the radial direction of mounting flange 120 than the outer circumferential portion of mounting flange 120, water splashing on mounting flange 120 can be guided toward waterproof flange 50 via bushing flange 42. Since waterproof flange 50 can provide waterproofing and a water droplet is less likely to remain around waterproof flange 50, waterproof portion 5 easily exhibits the waterproof effect.

Waterproof flange 50 and mounting flange 120 are fixed to bushing flange 42 using bolts 54 and 124, respectively, and bolt holes 42a and 42b into which bolts 54 and 124 are screwed, respectively, are formed in the front and rear surfaces of bushing flange 42. Since bolt hole 42a on the waterproof flange 50 side is located more outward than bolt hole 42b on the mounting flange 120 side, bolt 54 can be arranged more outward than seal member 52, waterproof flange 50 is easily fixed to bushing flange 42, pressure contact can be established between waterproof flange 50 and the end surface of solid insulation bus 2, and sealing property between waterproof flange 50 and bushing flange 42 can be effectively secured. In addition, since seal member 52 can be arranged on a surface on a side opposite to bolt hole 42b, and seal member 122a can be arranged on a surface on a side opposite to bolt hole 42a, an increase in the size of bushing flange 42 in a thickness direction can be suppressed, and sealing property between the members can be effectively secured.

### REFERENCE SIGNS LIST

1: waterproof structure for solid insulation bus;
2: solid insulation bus;
2G: GIS-side end portion;
2T: transformer-side end portion;
20: conductor;
21: terminal;
210: connection portion;
211: bolt;
22: coating portion;
221: inner semiconducting layer;
222: insulating layer;
223: outer semiconducting layer;
25: space for connection;
26: space for a back plug;
3: connector of a conducting bar;
4: bushing;
4G: GIS-side bushing;
4T: transformer-side bushing;
40: bushing body portion;
40h: insertion hole;
42: bushing flange;
42a, 42b: bolt hole;
42ae, 42be: embedded electrode;
5: waterproof portion;
50, 55: waterproof flange;
51: seal groove;
52: seal member;
53: through hole;
54: bolt;
6: sealing flange;
7: insulating plug;
71, 72: embedded electrode;
8a: press-fit region;
8b: space region;
100: connection structure for solid insulation bus;
110: connection point on a transformation apparatus;
112: connection target;
114: case;
120: mounting flange;
121a, 121b: seal groove;
122a, 122b: seal member;
123: through hole;
124: bolt.

## Claims

1. A waterproof structure comprising:
a solid insulation bus (2) having a conductor (20), a terminal (21) connected to an end portion of the conductor (20), and a coating portion (22) including an inner semiconducting layer (221), an insulating layer (222), and an outer semiconducting layer (223) stacked in order from a conductor/terminal side toward outside;
a connector (3) of a conducting bar connected to the terminal;
a bushing (4) having a bushing body portion (40) covering outer circumference of the connector (3) of the conducting bar, and a bushing flange (42) protruding from the bushing body portion (40) outward in a radial direction thereof; and
a waterproof portion (5) having a waterproof flange (50) interposed between an end surface of the solid insulation bus (2) and the bushing flange (42),
wherein:
the solid insulation bus (2) has a space (25) into which an insertion region of the bushing body portion (40) is inserted;
the outer circumferential surface of the insertion region of the bushing body portion (40) extends along the inner circumferential surface of the space (25), and is constituted of an inclined surface having a truncated cone shape tapering toward the terminal (21), and an outer diameter of the insertion region is larger than an inner diameter of space (25) so that when the insertion region is inserted into space (25), the insertion region is fixed within the space (25) in a pressure contact state;
an outer circumferential portion of the bushing flange (42) is located radially outwardly of the end surface with respect to the radial direction of the solid insulation bus (2);
the outer circumferential portion of the bushing flange (42) is located more outward in a radial direction of the waterproof flange (50) than an outer circumferential portion of the waterproof flange (50); and
the bushing flange (42) is a plate-like member protruding outward in the radial direction of the bushing body portion (40), at a position in the longitudinal direction of the bushing body portion (40), and the bushing flange (42) is annularly provided on the entire circumference of bushing body portion (40) in a circumferential direction.

2. The waterproof structure according to claim 1, wherein the waterproof portion (5) includes
a seal member (52) which seals between the waterproof flange (50) and the bushing flange (42), and
a seal groove (51) which is formed in a bushing flange-side surface of the waterproof flange (50), and into which the seal member (52) is fitted.

3. The waterproof structure according to claim 1 or 2, wherein a region formed between an inner circumferential surface of the waterproof flange (50) and an outer circumferential surface of the bushing body portion (40) includes a press-fit region (8a) which the coating portion (22) enters, and a space region (8b)which the coating portion does not enter.

4. A connection structure comprising:
the waterproof structure according to any one of claims 1 to 3;
a connection point on a transformation apparatus (110) connected to the solid insulation (2) bus via the connector (3) of the conducting bar; and
a mounting flange (120) interposed between a surface of the bushing flange (42) facing the connection point on the transformation apparatus (110) and the connection point on the transformation apparatus (110).

5. The connection structure according to claim 4, wherein
the bushing flange (42) includes
a waterproof-side bolt hole (42a) opened on a waterproof flange side, and
a mounting-side bolt hole (42b) opened on a mounting flange side, and
the waterproof-side bolt hole (42a) is located more outward in a radial direction of the bushing flange (42) than the mounting-side bolt hole (42b).

6. The connection structure according to claim 4 or 5, wherein the outer circumferential portion of the bushing flange (42) is located more inward in the radial direction of the waterproof flange (50) than an outer circumferential portion of the mounting flange (120).

## Patentansprüche

1. Wasserdichte Struktur, die Folgendes aufweist:
eine massive Isolierschiene (2) mit einem Leiter (20), einem Anschluss (21), der mit einem Endabschnitt des Leiters (20) verbunden ist, und einem Deckschichtabschnitt (22), der eine innere halbleitende Schicht (221), eine isolierende Schicht (222) und eine äußere halbleitende Schicht (223) aufweist, die in der Reihenfolge von einer Leiter-/Anschlussseite nach außen gestapelt sind;
einem Verbinder (3) aus einem leitenden Stab, der mit dem Anschluss verbunden ist;
eine Buchse (4) mit einem Buchsenkörperabschnitt (40), der den Außenumfang des Verbinders (3) des leitenden Stabs bedeckt, und einem Buchsenflansch (42), der von dem Buchsenkörperabschnitt (40) in einer radialen Richtung nach außen hervorsteht; und
einen wasserdichten Abschnitt (5) mit einem wasserdichten Flansch (50), der zwischen einer Endoberfläche der massiven Isolierschiene (2) und dem Buchsenflansch (42) angeordnet ist,
wobei:
die massive Isolierschiene (2) einen Raum (25) aufweist, in den ein Einführungsbereich des Buchsenkörperabschnitts (40) eingeführt wird;
die äußere Umfangsoberfläche des Einführungsbereichs des Buchsenkörperabschnitts (40) sich entlang der inneren Umfangsoberfläche des Raums (25) erstreckt und aus einer geneigten Oberfläche besteht, die eine kegelstumpfförmige Verjüngung in Richtung des Anschlusses (21) aufweist, und ein Außendurchmesser des Einführungsbereichs größer als ein Innendurchmesser des Raums (25) ist, so dass, wenn der Einführungsbereich in den Raum (25) eingeführt wird, der Einführungsbereich innerhalb des Raums (25) in einem Druckkontaktzustand fixiert ist;
ein äußerer Umfangsabschnitt des Buchsenflansches (42) radial außerhalb der Endoberfläche in Bezug auf die radiale Richtung der massiven Isolierschiene (2) angeordnet ist;
der äußere Umfangsabschnitt des Buchsenflansches (42) in einer radialen Richtung des wasserdichten Flansches (50) weiter außen angeordnet ist als ein äußerer Umfangsabschnitt des wasserdichten Flansches (50); und
der Buchsenflansch (42) ein plattenartiges Element ist, das in der radialen Richtung des Buchsenkörperabschnitts (40) an einer Position in der Längsrichtung des Buchsenkörperabschnitts (40) nach außen hervorsteht, und der Buchsenflansch (42) auf dem gesamten Umfang des Buchsenkörperabschnitts (40) in einer Umfangsrichtung ringförmig vorgesehen ist.

2. Wasserdichte Struktur nach Anspruch 1, wobei der wasserdichte Abschnitt (5) Folgendes aufweist:
ein Dichtungselement (52), das zwischen dem wasserdichten Flansch (50) und dem Buchsenflansch (42) abdichtet, und
eine Dichtungsnut (51), die in einer buchsenflanschseitigen Oberfläche des wasserdichten Flansches (50) ausgebildet ist, und in die das Dichtungselement (52) eingepasst ist.

3. Wasserdichte Struktur nach Anspruch 1 oder 2, wobei
ein zwischen einer inneren Umfangsoberfläche des wasserdichten Flansches (50) und einer äußeren Umfangsoberfläche des Buchsenkörperabschnitts (40) ausgebildeter Bereich einen Presssitzbereich (8a) aufweist, in den der Deckschichtabschnitt (22) eintritt, und einen Raumabschnitt (8b), in den der Deckschichtabschnitt nicht eintritt.

4. Verbindungsstruktur, die Folgendes aufweist:
die wasserdichte Struktur nach einem der Ansprüche 1 bis 3;
einen Anschlusspunkt an einer Transformationsvorrichtung (110), der über den Verbinder (3) des leitenden Stabes mit der massiven Isolierschiene (2) verbunden ist; und
einen Montageflansch (120), der zwischen einer Oberfläche des Buchsenflansches (42), die dem Anschlusspunkt an der Transformationsvorrichtung (110) gegenüberliegt, und dem Anschlusspunkt an der Transformationsvorrichtung (110) angeordnet ist.

5. Verbindungsstruktur nach Anspruch 4, wobei der Buchsenflansch (42) aufweist:
eine wasserdicht-seitige Schraubenöffnung (42a), die auf einer wasserdichten Flanschseite geöffnet ist,
und
eine montageseitige Schraubenöffnung (42b), die auf einer Montageflanschseite geöffnet ist, und die wasserdicht-seitige Schraubenöffnung (42a) in radialer Richtung des Buchsenflansches (42) weiter außen angeordnet ist als die montageseitige Schraubenöffnung (42b).

6. Verbindungsstruktur nach Anspruch 4 oder 5, wobei der äußere Umfangsabschnitt des Buchsenflansches (42) in der radialen Richtung des wasserdichten Flansches (50) weiter innen angeordnet ist als ein äußerer Umfangsabschnitt des Montageflansches (120).

## Revendications

1. Structure imperméable à l'eau comprenant :
un bus d'isolation solide (2) présentant un conducteur (20), une borne (21) connectée à une partie d'extrémité du conducteur (20) et une partie de revêtement (22) incluant une couche semiconductrice intérieure (221), une couche isolante (222) et une couche semiconductrice extérieure (223) empilées dans l'ordre depuis un côté de conducteur/borne vers l'extérieur ;
un connecteur (3) d'une barre conductrice connecté à la borne ;
une douille (4) présentant une partie de corps de douille (40) recouvrant une circonférence extérieure du connecteur (3) de la barre conductrice, et une bride de douille (42) dépassant depuis la partie de corps de douille (40) vers l'extérieur dans une direction radiale de celle-ci ; et
une partie imperméable à l'eau (5) présentant une bride imperméable à l'eau (50) intercalée entre une surface d'extrémité du bus d'isolation solide (2) et la bride de douille (42), dans laquelle :
le bus d'isolation solide (2) présente un espace (25) dans lequel une région d'insertion de la partie de corps de douille (40) est insérée ;
la surface circonférentielle extérieure de la région d'insertion de la partie de corps de douille (40) s'étend le long de la surface circonférentielle intérieure de l'espace (25) et est constituée d'une surface inclinée présentant une forme de cône tronqué s'effilant vers la borne (21), et un diamètre extérieur de la région d'insertion est supérieur à un diamètre intérieur de l'espace (25) de sorte que lorsque la région d'insertion est insérée dans l'espace (25), la région d'insertion soit fixée à l'intérieur de l'espace (25) dans un état de contact de pression ;
une partie circonférentielle extérieure de la bride de douille (42) est située radialement en allant vers l'extérieur de la surface d'extrémité par rapport à la direction radiale du bus d'isolation solide (2) ;
la partie circonférentielle extérieure de la bride de douille (42) est située davantage vers l'extérieur dans une direction radiale de la bride imperméable à l'eau (50) qu'une partie circonférentielle extérieure de la bride imperméable à l'eau (50) ; et
la bride de douille (42) est un élément en forme de plaque dépassant vers l'extérieur dans la direction radiale de la partie de corps de douille (40), en une position dans la direction longitudinale de la partie de corps de douille (40), et la bride de douille (42) est prévue de façon annulaire sur la totalité de la circonférence de la partie de corps de douille (40) dans une direction circonférentielle.

2. Structure imperméable à l'eau selon la revendication 1, dans laquelle la partie imperméable à l'eau (5) inclut
un élément d'étanchéité (52) qui étanche entre la bride imperméable à l'eau (50) et la bride de douille (42), et
une gorge d'étanchéité (51) qui est formée dans une surface côté bride de douille de la bride imperméable à l'eau (50) et dans laquelle l'élément d'étanchéité (52) est ajusté.

3. Structure imperméable à l'eau selon la revendication 1 ou 2, dans laquelle
une région formée entre une surface circonférentielle intérieure de la bride imperméable à l'eau (50) et une surface circonférentielle extérieure de la partie de corps de douille (40) inclut une région d'ajustage par pression (8a) dans laquelle la partie de revêtement (22) pénètre et une région d'espace (8b) dans laquelle la partie de revêtement ne pénètre pas.

4. Structure de connexion comprenant :
la structure imperméable à l'eau selon l'une quelconque des revendications 1 à 3 ;
un point de connexion sur un appareil de transformation (110) connecté au bus d'isolation solide (2) via le connecteur (3) de la barre conductrice ; et
une bride de montage (120) intercalée entre une surface de la bride de douille (42) faisant face au point de connexion sur l'appareil de transformation (110) et le point de connexion sur l'appareil de transformation (110).

5. Structure de connexion selon la revendication 4, dans laquelle la bride de douille (42) inclut
un trou de boulon côté imperméable à l'eau (42a) ouvert sur un côté de bride imperméable à l'eau, et
un trou de boulon côté montage (42b) ouvert sur un côté de bride de montage, et
le trou de boulon côté imperméable à l'eau (42a) est situé davantage vers l'extérieur dans une direction radiale de la bride de douille (42) que le trou de boulon côté montage (42b).

6. Structure de connexion selon la revendication 4 ou 5, dans laquelle la partie circonférentielle extérieure de la bride de douille (42) est située davantage vers l'intérieur dans la direction radiale de la bride imperméable à l'eau (50) qu'une partie circonférentielle extérieure de la bride de montage (120).
